# EUROPÄISCHE PATENTSCHRIFT

(11) **EP 2 901 843 B1**
(45) Veröffentlichungstag und Bekanntmachung des Hinweises auf die Patenterteilung: **07.12.2016**
(21) Anmeldenummer: 15153837.8
(22) Anmeldetag: 04.02.2015
(51) Int. Cl.: A01D 89/00

(54) **Erntegutaufnehmer**
Crop collecting device
Élément récepteur de récolte

(30) Priorität: 04.02.2014 DE 102014101370
(43) Veröffentlichungstag der Anmeldung: 05.08.2015
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB

(56) Entgegenhaltungen:
- DD-A1- 143 496
- DE-A1-102011 085 256
- DE-U1-202010 010 038
- US-A1- 2011 094 202

## Beschreibung

Die Erfindung betrifft einen Erntegutaufnehmer gemäß der im Oberbegriff des Patentanspruches 1 angegebenen Art.

Aus der DD 143 496 ist ein Erntegutaufnehmer bekannt, der eine elastische Welle aufweist, die sich über die gesamte Arbeitsbreite des Erntegutaufnehmers erstreckt. Die elastische Welle kann an beliebiger Stelle angetrieben werden und weist sternförmige Zinken zur Aufnahme des Ernteguts und zwischen den Zinken liegende Abstreifer auf. Durch die elastische Ausbildung der Welle und eine federnd gelenkige Anbringung der Abstreifer, die auch als Bodenkopiertaster dienen, wird eine gute Anpassung der Aufnehmer an die Bodenkontur erreicht.

Allerdings ergeben sich durch den Einsatz einer elastischen Welle Probleme mit unzureichender Stabilität und hohem Verschleiß. Im Betrieb wirken durch den Vorschub des Erntegutaufnehmers und das hohe Eigengewicht starke Kräfte auf den Erntegutaufnehmer. Durch die Anpassung an die Bodenkontur treten bei der Welle unterschiedlich starke Verformungen auf. Ab einer gewissen Stärke der Verformung sind die zuvor erwähnten Kräfte der Stabilität des Erntegutaufnehmers abträglich und können schädlich für die elastische Welle sein.

Aufgabe der Erfindung ist es, eine elastische Welle eines Erntegutaufnehmers derart weiterzubilden, um die vorgenannten Nachteile zu beseitigen und einerseits die Stabilität der Vorrichtung zu erhöhen und den Verschleiß zu verringern, wobei es zudem Aufgabe ist das Aufnahmeergebnis zu verbessern.

Diese Aufgabe wird durch die kennzeichnenden Merkmale des Patentanspruches 1 in Verbindung mit seinen Oberbegriffsmerkmalen gelöst.

In bekannter Weise umfasst ein Erntegutaufnehmer eine elastische Welle, die über ein Fortbewegungsmittel, das gegenüber einem Rahmen, insbesondere einen Elementrahmen höhenbeweglich gelagert ist, über eine Bodenkontur geführt wird. Dabei trägt die elastische Welle wenigstens ein Aufnahmewerkzeug zur Aufnahme von Erntegut. Ferner ist eine Lagerung der elastischen Welle vorgesehen, bei der wenigstens ein Lagerelement mit dem Fortbewegungsmittel verbunden ist. Elastisch ist im Sinne der Erfindung als biegeweich zu sehen.

Erfindungsgemäß weist das Lagerelement zwei in Axialrichtung beabstandete Lagerpunkte auf, die steif miteinander verbunden sind.

So ist die elastische Welle über einen Teilabschnitt im Abstand der Lagerpunkte versteift, wodurch die Welle stabilisiert und ihre Biegelinie beeinflusst wird. Durch die steife Verbindung der beiden Lagerpunkte wird die elastische Welle in Orthogonalrichtung zur elastischen Welle im Wesentlichen versatzfrei gelagert. Die Vertikalbewegung eines Fortbewegungsmittels wird somit gleichsam auf beide Lagerpunkte übertragen.

Durch diese Ausgestaltung wird der Verschleiß der elastischen Welle deutlich verringert, da auf Grund der Versteifung die beim Biegen der Welle auf die Welle wirkenden Kräfte besser verteilt werden.

Vorzugsweise werden die Lagerpunkte durch zwei beabstandete, jeweils einen Lagerpunkt aufweisende einzelne Lager, insbesondere Wälzlager, insbesondere Radialkugellager, gebildet.

Das Lagerelement kann eine Konsole umfassen, wobei die Lager in eine Konsole eingearbeitet sein können, welche die einzelnen Lager in axialer Richtung beabstandet und steif verbindet. Auf diese Weise kann der Abstand zwischen den Lagerpunkten so gewählt werden, dass er den Anforderungen entspricht, die sich aus der Dimensionierung des Erntegutaufnehmers, der Bodenbeschaffenheit im beabsichtigten Einsatzgebiet etc. ergibt, so dass eine angestrebte Biegelinie eingestellt werden kann. Die Konsole ist neben dem Lager auch an dem beweglichen Fortbewegungsmittel befestigt bzw. wird die Konsole von dem Fortbewegungsmittel getragen.

Gemäß einem weiteren Aspekt der Erfindung kann das Lagerelement eine Nabe aufweisen, über welche die elastische Welle mit den Lagerpunkten verbunden ist.

Die Nabe ermöglicht eine Anpassung der Querschnittsprofile zwischen elastischer Welle und Lagerelement, insbesondere durch formschlüssige Aufnahme der Welle in der Nabe in Umfangsrichtung. Dies sorgt für einen besonders runden Lauf der Welle im Lagerelement unabhängig von ihrer Querschnittsgeometrie. Durch die Dimensionierung der Nabe, insbesondere in axialer Erstreckung, kann zudem eine Versteifung der elastischen Welle über den Lagerpunktabstand hinaus erfolgen.

Günstig ist es, wenn der axiale Abstand der Lager so eingestellt ist, dass zwischen den Lagern wenigstens ein Aufnahmewerkzeug mit der elastischen Welle verbunden sein kann. Dadurch kann eine tote Zone, die sonst unterhalb des Lagerelements im Abstand der Lagerpunkte entsteht, vermieden oder zumindest deutlich verkleinert werden. Eine Totzone ergibt sich so nur im Bereich eines Lagers des Lagerelements, der meist durch die Aufnahmewerkzeuge überbrückt werden kann und damit fast vollständig vermieden werden kann. Entsprechend kann auf diese Weise insbesondere kurzes Erntegut sauber aufgenommen werden.

In einer weiteren vorteilhaften Ausgestaltung kann ein Antriebsmittel vorgesehen sein, über welches die elastische Welle mit einem Motor verbunden werden kann. Das Antriebsmittel kann bevorzugt zwischen den zwei Lagern eines Lagerelements angebracht sein. Das Antriebsmittel wirkt so im stabilisierten Abschnitt der elastischen Welle. Dadurch wird Verschleiß reduziert, da die Kräfte vom Antriebsmittel auf die elastische Welle wirkenden Kräfte weitgehend spielfrei übertragen werden können.

Zur Aufteilung der Drehmomente und zur Verringerung der Gefahr des Auftretens von Schwingungen der elastischen Welle hat sich eine axial mittige Anbringung des Antriebsmittels an der elastischen Welle als besonders sinnvoll erwiesen. Durch den Anschluss des Antriebs in der Mitte der Arbeitsbreite des Erntegutaufnehmers können Momente und auftretende Trägheiten halbiert werden.

Um eine weiter verbesserte Kraftübertragung zwischen Antriebsmittel und elastischer Welle zu erreichen, kann das Antriebsmittel über eine Nabe mit der Welle verbunden sein. Neben einer Profilanpassung verbessert diese Ausgestaltung die Stabilität der Aufnahmevorrichtung und reduziert den Verschleiß des Antriebsmittels.

Das Antriebsmittel kann vorzugsweise als Zahnrad ausgebildet sein, welches über ein Zahnradgetriebe mit einem Motor verbunden sein kann.

Gemäß einer vorteilhaften Weiterbildung der Erfindung ist ein elastisches Joch vorgesehen, das zum einen auf einer Konsole aufweisenden Lagerelement mit der elastischen Welle verbunden und das zum anderen mit dem wenigstens ein Fortbewegungsmittel verbunden ist. Das elastische Joch ist derart elastisch verformbar, dass eine Relativbewegung des Fortbewegungsmittels gegenüber dem Rahmen in vertikaler Richtung zur Achse des Jochs möglich ist. Einerseits wird durch die Wahl eines geeigneten Abstands der beiden Lagerpunkte voneinander die Biegelinie der elastischen Welle direkt beeinflusst, andererseits wird durch die Konsole das Joch über einen Abschnitt einer definierten axialen Ausdehnung, der abhängig von Elastizität und Geometrie des elastischen Jochs ist, so versteift, dass bei einem Durchbiegen der elastischen Welle die Jochbiegelinie und die Wellenbiegelinie annähernd identisch sind. Durch diese Ausgestaltung wird die Führung der Aufnahmewerkzeuge der Bodenkontur optimal angepasst und zugleich wird die Gefahr zerstörerischer Spannungen zwischen Welle und Joch eliminiert.

Zur Weiterbildung des Jochs und der am Joch befestigten Abstreifer, wird auf die PCT/EP2013/068619 per Referenz verwiesen. Insbesondere wird auf die Ausführungen der Fig. 1 und Fig. 2, sowie die Ausführungen der Ansprüche 5 bis 13 verwiesen.

Günstig ist es ferner, wenn die elastische Welle mehrere, insbesondere zwei Wellenteile umfasst, die vorzugsweise über eine Nabe verdrehfest miteinander verbunden sind. Die geringere Länge und das geringere Gewicht einzelner Wellenteile ermöglichen eine einfachere Handhabung im Wartungs- oder Reparaturfall. Insbesondere können zwei Wellenteile gleich lang ausgebildet sein, wonach sich eine Verbindung der Wellenteile in der Mitte des Erntegutaufnehmers ergibt. Die Verbindung kann in einer Nabe erfolgen, die die beiden Wellenteile in Drehrichtung formschlüssig und in Axialrichtung kraftschlüssig fixiert.

Die Nabe kann auch in vorteilhafter Weise mit einem Antriebsmittel verbunden sein, um einen Antrieb der beiden Wellenteile im Verbindungspunkt zu gewährleisten.

In einer besonders vorteilhaften Ausführungsform umfasst ein erfindungsgemäßer Erntegutaufnehmer drei Lagerelemente.

Ein erstes Lagerelement ist mittig an der elastischen Welle vorgesehen, zwischen dessen zwei Lagern ein Antriebsmittel angebracht sein kann. Ferner sind an den beiden Enden der elastischen Welle zwei weitere Lagerelemente vorgesehen. Zwischen zwei beabstandeten Lagern eines Lagerelements kann wenigstens ein Aufnahmewerkzeug angebracht ist.

Die drei Lagerelemente sind insbesondere über ein elastisches Joch miteinander verbunden. Das elastische Joch ist über eine Konsole des Lagerelements mit der elastischen Welle und den Fortbewegungsmitteln verbunden. Die elastische Welle und das elastische Joch sind über die Lagerelemente bereichsweise so versteift, dass eine weitgehend identische Biegelinie vom elastischen Joch und der elastischen Welle realisierbar ist. Durch die weitgehende Identität der Biegelinien von elastischem Joch und elastischer Welle kann der zerstörungsfreie Betrieb des Erntegutaufnehmers trotz einer überbestimmten Lagerung erfolgen. Dadurch wird einerseits eine stabile Anordnung von Antrieb und elastischer Welle mit hervorragender Kraftübertragung und geringem Verschleiß erreicht und andererseits eine ausreichend stabile Lagerung der elastischen Welle, die eine sehr flexible Höhenanpassung der Aufnahmewerkzeuge ermöglicht und tote Zonen, die sonst an Lagerelementen entstehen, weitestgehend eliminiert.

In einer weiteren vorteilhaften Ausgestaltung, kann die Biegelinie, die durch die Lagerelemente der elastischen Welle aufgeprägt wird, durch Streben beeinflusst werden. Die elastische Welle ist dazu auf wenigstens zwei beweglichen Fortbewegungsmitteln gelagert, die in ihrer vertikalen Richtung veränderlich gegenüber dem Rahmen ausgestaltet sind.

Zur Beeinflussung der Biegelinie ist eine Strebe vorgesehen, welche mittels eines Strebenlagers drehbar um eine Achse orthogonal zur Welle am Rahmen, der insbesondere als Elementrahmen ausgestaltet ist, gelagert ist.

Die Strebe verbindet auf diese Weise den Rahmen mit den beweglichen Fortbewegungsmitteln. Das Lager, ist in Axialrichtung der Strebe zwischen den verbundenen beweglichen Fortbewegungsmitteln angeordnet.

Auf diese Weise hat eine Vertikalbewegung eines beweglichen Fortbewegungsmittels direkte Auswirkung auf das mit ihm über die Strebe verbundene zweite bewegliche Fortbewegungsmittel, indem eine Drehung um die Achse des Strebenlagers erfolgt, die in der Regel etwa parallel zur Fahrtrichtung liegt, gegebenenfalls leicht geneigt gegenüber der Fahrtrichtung ist.

Auf diese Weise kann eine grobe Bodenanpassung über das Niveau des Elementrahmens eingestellt werden, wobei die Welle nur noch Schwankungen um das Niveau des Tragelements ausgesetzt ist. Auf diese Weise kann der maximale vertikale Versatz der beiden beweglichen Fortbewegungsmittel gegeneinander wirksam begrenzt werden. Dies führt zu einer erheblich längeren Lebensdauer der elastischen Welle. Indem die Lagerelemente axial beweglich gegenüber den Streben mit diesen verbunden sind, kann die Form der Biegelinie und deren maximale Durchbiegung durch die Strebengestaltung begrenzt werden.

In einer bevorzugten Ausführungsform erfolgt die Bodenführung des Elementrahmens über am Elementrahmen, insbesondere fest, angeordnete Fortbewegungsmittel. Alternativ kann der Erntegutaufnehmer auch direkt an einer Zugmaschine befestigt sein.

Die am Rahmen angeordneten Fortbewegungsmittel, die im Folgenden auch als rahmenfest bezeichnet werden, können vorzugsweise in geeigneter Weise axial in der Nähe bzw. im Bereich der Lageraufnahme angebracht sein, idealerweise befinden sich die Strebenlager in der vertikalen Projektion über den Aufstandsflächen der Fortbewegungsmittel.

Vorzugsweise sind sowohl bewegliche als auch rahmenfeste Fortbewegungsmittel in einer seitlichen Ansicht überlappend angeordnet.

Dies sorgt für eine besonders effiziente Niveauregulierung, da die Auslenkung im Verhältnis des Abstands der beweglichen von den rahmenfesten Fortbewegungsmitteln gering ist. Insbesondere ist das rahmenfeste Fortbewegungsmittel mittig zwischen den beiden benachbarten vertikal beweglichen Fortbewegungsmitteln angeordnet.

In einer weiteren Ausführungsform können Anschlagmittel vorgesehen sein, welche die Drehung der Strebe um das Strebenlager begrenzen und somit nur einen vordefinierten Drehwinkel der Strebe erlauben.

Dadurch kann insbesondere bei der Verwendung mehrerer solcher Streben eine Überstreckung einer elastischen Welle vermieden werden. Im Falle einer elastischen Welle liegt die Lagerachse das Strebenlagers orthogonal zur elastischen Welle im gestreckten Zustand.

In einer weiteren bevorzugten Ausgestaltung kann die Welle elastisch ausgestaltet sein, was für eine verbesserte Bodenanpassung sorgt.

Eine elastische Welle im Sinne der Erfindung weist eine Biegeelastizität auf, die im belasteten Betrieb eine Durchbiegung der Wellenmitte von wenigstens 1 cm, insbesondere wenigstens 2cm, insbesondere wenigstens 3cm auf eine Länge von 3m zulässt.

In einer besonders bevorzugten Ausführungsform weist der erfindungsgemäße Erntegutaufnehmer wenigstens zwei Streben auf, die jeweils mit dem Rahmen verbunden sind. In Verbindung mit der elastischen Welle gewährleistet die Strebe eine gewissermaßen sanfte Verformung der elastischen Welle. Durch zwei Streben kann die elastische Welle über zwei Teilbereiche verformt werden, wodurch eine verbesserte Bodenanpassung und eine Verbesserung der Güte realisiert werden kann. Es können auch mehrere Wellen vorgesehen sein, welche den Teilbereichen zugeordnet sind.

In besonders vorteilhafter Weise sind die beiden Streben über ein gemeinsames bewegliches Fortbewegungsmittel verbunden. Dadurch wird eine möglichst gleichmäßige flügeschlagartige Verformung der elastischen Welle gewährleistet.

Sind zwei Streben an ihren zugewandten Enden über ein vertikal bewegliches Fortbewegungsmittel gekoppelt, wird durch das Strebenverhalten der elastischen Welle eine bogenförmige Verformung aufgeprägt. Diese Verformung kann aufgrund der erfindungsgemäßen Gestaltung der Lagerelemente ideal auf die elastische Welle und auch auf ggfs. vorgesehenes elastisches Joch übertragen werden.

Für den Fall, dass mehrere Streben vorgesehen sind, ist es sinnvoll, wenigstens zwei Streben ein rahmenfestes Fortbewegungsmittel zuzuordnen. Dieses ist vorzugsweise im Bereich des Strebenlagers am Rahmen angeordnet. Zusätzlich können die beweglichen Fortbewegungsmittel über ein elastisches Joch verbunden sein. Ein elastisches Joch im Sinne der Erfindung ist in Vertikalrichtung biegeweich ausgestaltet und verformt sich in vertikaler Richtung analog zur elastischen Welle.

Durch das elastische Joch wird der Erntegutaufnehmer quer zur Fahrtrichtung zusätzlich versteift, wobei die Beweglichkeit in vertikaler Richtung, die für die Bodenanpassung notwendig ist, erhalten bleibt.

Bei Verwendung eines elastischen biegeweichen Jochs kann die Strebe mit dem Joch verbunden sein. Auf diese Weise wirken auftretende hohe Vertikalkräfte nicht auf das Joch sondern können aufgrund der Drehbegrenzung vom Rahmen aufgenommen werden.

Dadurch können Verwerfungen des elastischen Joches und der elastischen Welle vermieden werden.

Bei der Anbindung der Strebe an das elastische Joch ist zu beachten, dass diese vorzugsweise derart erfolgen kann, dass eine translatorische Relativbewegung zwischen Strebe und elastischem Joch in axialer Richtung des elastischen Jochs erfolgen kann. Dadurch kann eine Führung des Jochteils durch die Strebe gewährleistet werden, ohne die Biegecharakteristik des Joches zu beeinflussen. Die Strebe wirkt dann als Sekante der bogenförmigen Verformung von elastischen Joch und elastischer Welle.

Die vertikale Beweglichkeit der Fortbewegungsmittel kann über am Rahmen angelenkte Lenker umgesetzt werden. Durch die Lenkeranordnung können die Fortbewegungsmittel in Fahrtrichtung und quer zur Fahrtrichtung stabilisiert werden und dennoch eine vertikale Bewegung ausführen.

Eine besonders bevorzugte Ausführungsform legt das Strebenlager für die Strebe mittig zwischen den zwei beweglichen Fortbewegungsmitteln fest. Dies sorgt für eine Gleichverteilung der Aufstandskräfte.

Ein Fortbewegungsmittel im Sinne der Erfindung dient als Aufstandsfläche des Erntegutaufnehmers und ist so gestaltet, dass es die Bewegung des Erntegutaufnehmers führt, jedoch nicht zwingend selbst angetrieben ist. Vorzugsweise sind die Fortbewegungsmittel in Form von Kufen, Gleitkufen, Rädern oder Walzen ausgebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Übersicht eines erfindungsgemäßen Erntegutaufnehmers;
- Fig. 2: eine perspektivische Ansicht eines Lagerelements;
- Fig. 3: eine perspektivische Schnittansicht eines Lagerelements mit Joch;
- Fig. 4a: eine perspektivische Schnittansicht eines Lagerelements mit Antrieb;
- Fig. 4b: eine Schnittansicht eines Lagerelements mit Antrieb;
- Fig. 5: eine Draufsicht auf einen erfindungsgemäßen Erntegutaufnehmer, dessen bewegliche Fortbewegungsmittel über Streben gelagert sind;
- Fig. 6: eine teilweise Rückansicht eines erfindungsgemäßen Erntegutaufnehmers nach Fig. 5, und
- Fig. 7: eine perspektivische Schnittansicht.

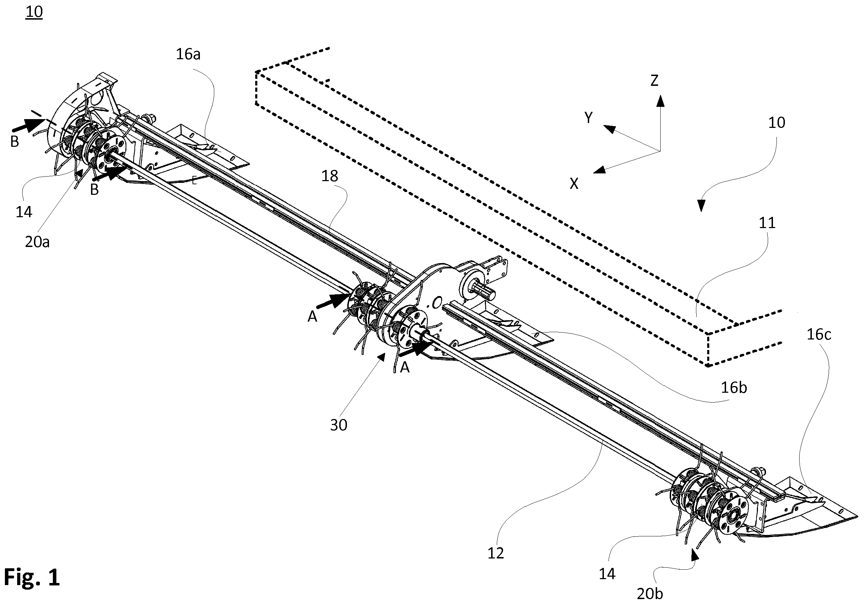

Fig. 1 zeigt einen erfindungsgemäßen Erntegutaufnehmer 10. Der Erntegutaufnehmer 10 umfasst in dieser Ausführungsform drei Fortbewegungsmittel 16a, 16c, 16b, welche über eine elastische Welle 12 und ein elastisches Joch 18 in Querrichtung Y miteinander verbunden sind. Ferner sind Lagerelemente 20a, 20b, 30 jeweils einer Kufe 16a, 16b, 16c zugeordnet, mit welcher sie verbunden sind. Ein Versatz der Kufe 16a, 16b, 16c in Vertikalrichtung Z wirkt sich dadurch unmittelbar auf die Bewegung der zugeordneten Lagerelemente 20a, 20b, 30 aus. Durch den Versatz der gegenüber einem schematisch dargestellten Rahmen 11 höhenbeweglich gelagerten Kufen 16a, 16b, 16c kommt es zu einer Verbiegung von elastischem Joch 18 und elastischer Welle 12, welche in den Lagerelementen 20a, 20b, 30 gelagert ist.

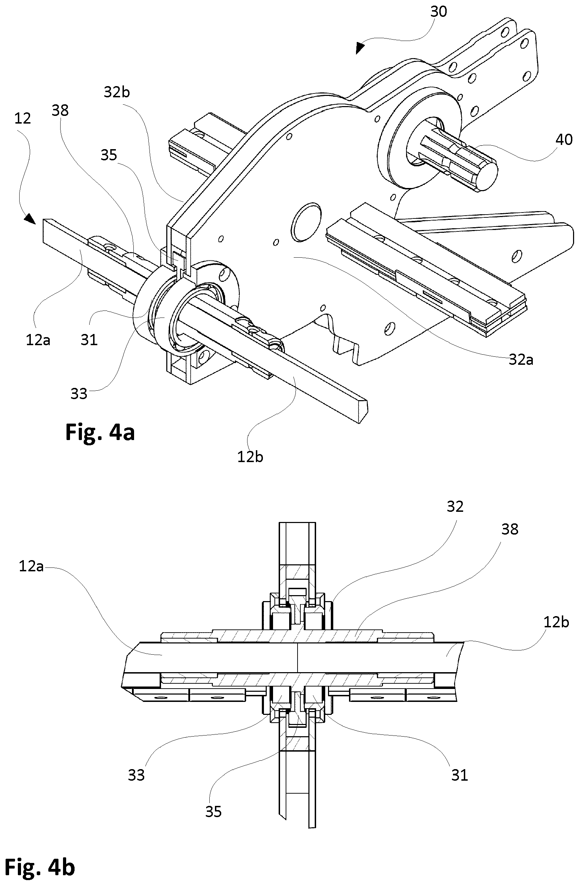

Die Lagerelement 20a, 20b sind derart ausgestaltet, dass sie die Welle 12 an je zwei Lagerpunkten lagern. Diese beiden Lagerpunkte sind in axialer Richtung voneinander beabstandet und steif miteinander verbunden. Der Erntegutaufnehmer 10, wie er in Fig. 1 dargestellt ist, umfasst zudem das Lagerelement 30 mit einem Antrieb, wie er in Fig. 4 näher dargestellt ist.

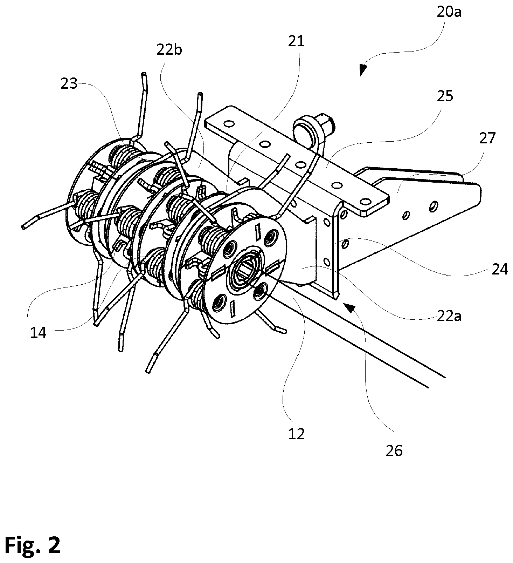

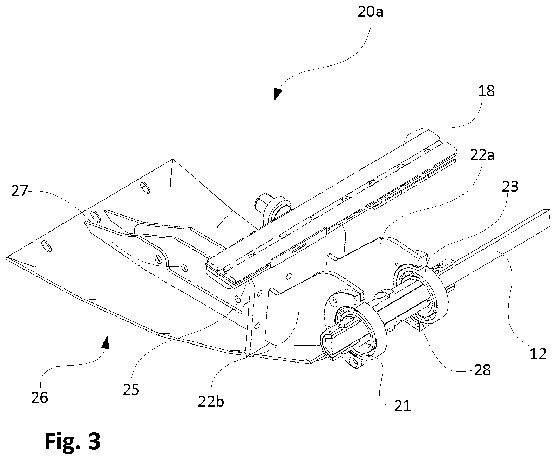

Ferner ist ein nahe dem Ende der Welle 12 angebrachtes Lagerelement 20a vorgesehen. Das Lagerelement 20a ist mit dem Fortbewegungsmittel 16a verbunden und weist zwischen seinen Lagerpunkten jeweils zwei Aufnahmewerkzeuge 14 auf. Das Lagerelement 20b am gegenüberliegenden Ende der Welle 12 ist analog ausgeführt. Die entsprechende Ausgestaltung der Lagerung ist in den Fig. 2 und 3 näher beschrieben. Um eine Identität der Biegelinie zwischen elastischem Joch 18 und der elastischen Welle 12 zu gewährleisten, sind diese über das Lagerelement 20a aufweisend eine Konsole 26, wie sie in Fig. 2 und 3 näher erläutert wird, steif verbunden.

Durch die Verbindung des elastischen Joches 18 durch die Lagerelemente 20a, 20b, 30 und die entsprechende Ausbildung ihrer Konsolen wird im Wesentlichen eine Identität der Biegelinien erreicht. Obwohl die Mehrfachlagerung zu einer Überbestimmung des Systems führt, erfolgt eine Kompensation durch die im System vorhandene Elastizität, wodurch ein zerstörungsfreier Betrieb des Erntegutaufnehmers 10 möglich ist.

Fig. 2 zeigt ein Lagerelement 20a zur Lagerung einer elastischen Welle 12 für einen erfindungsgemäßen Erntegutaufnehmer 10. Das Lagerelement 20a umfasst zwei axial voneinander beabstandete Lager 21 und 23, die über eine Konsole 26 steif miteinander verbunden sind. Zwischen den beiden Lagern 21 und 23 sind zwei Aufnahmewerkzeuge 14 mit der elastischen Welle 12 verbunden. Der Übersicht halber sind von der Mehrzahl der auf der elastischen Welle 12 vorgesehenen Aufnahmewerkzeuge 14 nur vier dargestellt. Aus Figur 1 lässt sich jedoch gut erkennen, dass durch diese Lagerung unterhalb des Lagerelements 20a keine tote Zone entsteht und Erntegut dort vollständig aufgenommen werden kann.

Die zwei Lager 21,23 des Lagerelements 20a sind steif über eine Konsole 26 verbunden. Die Konsole 26 umfasst zwei Seitenwände 22a, 22b die in einer Verbindungswand 24 steif, insbesondere stoffschlüssig angebracht sind.

Die Verbindungswand 24 ist zusätzlich mit einer Jochaufnahmefläche 25 versehen, die eine im Bereich der Jochaufnahmefläche 25 steife Verbindung mit einem elastischen Joch 18 ermöglicht. Ferner ist ein Verbindungsbereich 27 vorgesehen, über den die Konsole 26 mit einem Fortbewegungsmittel verbindbar ist.

Auf diese Weise kann ein durch das Fortbewegungsmittel ausgeführte Vertikalbewegung gleichmässig auf die beiden Lagerelemente 21, 23 und damit auf die elastische Welle 12 sowie auf das elastische Joch übertragen werden.

Fig. 3 zeigt eine schematische perspektivische Teilschnittansicht B-B aus Fig.1 des Lagerelements 20a. Die beiden angedeuteten als Radialkugellager 21 und 23 ausgebildeten Lager sind an Konsolenwänden 22a und 22b befestigt, die zusammen mit einer die Konsolenwände 22a und 22b steif verbindende Verbindungswand 24 eine Konsole 26 bilden. In den Lagern 21 und 23 ist eine Nabe 28 gelagert, die die Welle 12 umgreift und deren Länge sich axial zu beiden Seiten hin über die beiden Lager 21 und 23 hinaus erstreckt. Auf der Oberseite der Verbindungswand 24 ist das elastische Joch 18 auf der Jochaufnahmefläche 25 der Konsole 26 befestigt, so dass die Konsole 26 die elastische Welle 12 mit dem elastischen Joch 18 steif verbindet. Ferner kann die Konsole 26 über einen Verbindungsbereich 27, insbesondere fest, mit einem Fortbewegungsmittel verbunden werden.

Die Nabe 28 schafft zum einen eine Versteifung der elastischen Welle 12 im Klemmbereich sowie zum anderen eine in Drehrichtung formschlüssige Verbindung mit der Nabe 28, so dass im Bereich der Nabe 28 ein runder Lauf der elastischen Welle 12 gewährleistet ist. In der Darstellung der Fig. 3 ist hier weder ein Antriebsmittel noch ein Aufnahmewerkzeug dargestellt, so dass die Fig. 3 als grundsätzliche Darstellung eines erfindungsgemäßen Lagerelements 20a betrachtet werden kann.

Fig. 4a zeigt eine perspektivische Teilschnittansicht A-A aus Fig. 1. Das dort dargestellte Lagerelement 30 ist mit einem Fortbewegungsmittel verbindbar und zeigt schematisch zwei als Radialkugellager ausgebildete Lager 31, 33. Diese sind in einer Konsolenwand 32a, 32b eingebettet, die als Getriebewand dient. Die Konsolenwand 32a, 32b des Lagerelements 30 dient in dieser Ausführungsform somit als Gehäuse für ein nicht näher dargestelltes Getriebe. Das Getriebe wirkt auf ein an der Nabe 38 angeordnetes Zahnrad 35, welches drehfest mit der Nabe 38 verbunden ist. Dadurch kann ein Antrieb der Welle 12, welche zwei Wellenteile 12a, 12b umfasst, über den Antriebsstummel 40 erzielt werden.

Auf diese Weise dient die Nabe 38 nicht nur der Versteifung der Welle 12 im Bereich der Lageraufnahme und zur Anpassung der Wellengeometrie an die Lagergeometrie sondern auch als Verbindungselement der beiden Wellenteile. Die Verbindung erfolgt in Axialrichtung lösbar kraftschlüssig um eine verbesserte Wartung zu gewährleisten.

Durch die erfindungsgemäße Lagerung kann entsprechend eine ideale Identität der Biegelinie von elastischer Welle 12 und elastischem Joch 18 auf einfache Weise hergestellt werden und darüber hinaus einen verbesserten Aufnahmewirkungsgrad bereitstellen.

Fig. 4b zeigt eine Schnittansicht zu Fig. 4a. Besonders gut an dieser Schnittansicht zu sehen ist, dass die Lager 31, 33 die Nabe 38 lagern, in welcher zwei Wellenteile 12a, 12b auf Stoß verbunden sind.

Zudem ist an der Nabe 38 ein Zahnrad 35 mit dieser drehfest verbunden. Dadurch erfolgt ein Antrieb der Welle 12. Das Zahnrad 35 ist dabei zwischen den zwei Lagern 31, 33 angeordnet. Der Antrieb wirkt daher in besonders biegesteifen Bereich auf die Welle.

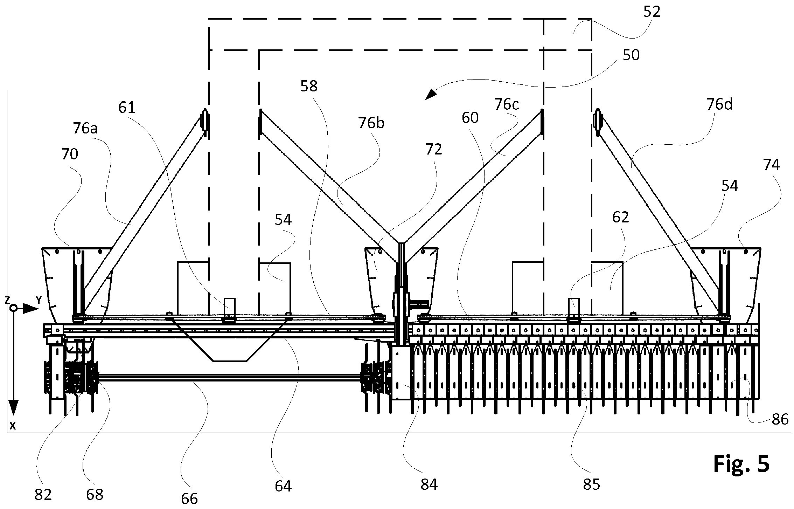

Fig. 5 zeigt eine Draufsicht auf den erfindungsgemäßen Erntegutaufnehmer 50. Der erfindungsgemäße Erntegutaufnehmer 50 umfasst einen Elementrahmen 52, der als Tragelement dient. Der Elementrahmen 52 wird über schematisch dargestellte rahmenfeste Kufen 54 über den Boden geführt. Ferner sind im Elementrahmen 52 Strebenlager in Form von Lagerzapfen 61, 62 vorgesehen, die je eine Strebe 58, 60 drehbar gegenüber dem Elementrahmen 52 lagern. Die Lagerachsen der Lagerzapfen 61, 62 liegen im Wesentlichen in Fahrtrichtung X.

Der Erntegutaufnehmer 50 umfasst ferner ein elastisches Joch 64 und eine elastische Welle 66. An der elastischen Welle 66 sind Zinkenscheiben 68 zur Aufnahme von Erntegut angebracht. Das elastische Joch 64 ist biegeweich in Vertikalrichtung Z ausgestaltet und verbindet die beweglichen Kufen 70, 72, 74. Am elastischen Joch 64 sind Abstreifer 85 zwischen den Zinkenscheiben 68 angeordnet, die das Abstreifen des aufgenommenen Ernteguts von den Zinkenscheiben 68 verbessern.

Die Kufen 70, 72, 74 sind über zugeordnete Lenker 76a, 76b, 76c, 76d an dem Rahmen 52 angebunden.

Durch die Anbindung der Lenker 76a, 76b, 76c, 76d kann eine Stabilisierung in Fahrtrichtung und quer zur Fahrtrichtung erfolgen, wohingegen eine Vertikalbewegung der beweglichen Kufen 70, 72, 74 ermöglicht wird.

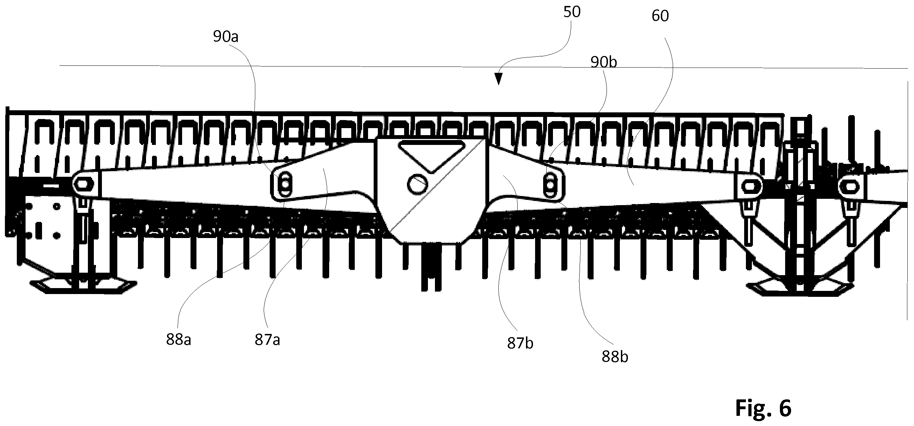

Bei einem Versatz, beispielsweise der Kufen 72, 74 aufgrund der Bodenkontur führt dies zu einer Drehung der Strebe 60 um den Lagerzapfen 62. Aufgrund vorgesehener Begrenzungsmittel, wie in Fig. 6 beschrieben, wird die Drehung der Strebe 58, 60 um den jeweiligen Lagerzapfen 61,62 begrenzt, wodurch eine Überstreckung der elastischen Welle 66 und des elastischen biegeweichen Joches 64 vermieden wird.

In dieser Ausführungsform sind die Lagerelemente 82,84,86 analog Fig. 2 und Fig. 4a ausgeführt. Durch diese Lagerelemente 82, 84, 86 wird die bogenförmige Biegung von den beweglichen Kufen 70,72,74 auf die elastische Welle 66 und das elastische Joch 64 übertragen. Eine Aufprägung der bogenförmigen Biegelinie erfolgt durch die Streben 58, 60, die über die Kufe 72 verbunden sind.

Fig. 6 zeigt eine teilweise Rückansicht eines erfindungsgemäßen Erntegutaufnehmers gemäß Fig. 5. Die die Aufnahmewerkzeuge tragende elastische Welle 66 ist über die Strebe 60 mit dem Elementrahmen 52 verbunden und ist in diesem drehbar gelagert.

Zur Drehbeschränkung der Strebe 60 gegenüber dem Elementrahmen 52 weist der Elementrahmen 52 Begrenzungsflächen 87a, 87b auf, die mit einem Langloch 88a, 88b versehen sind, in welches jeweils ein Bolzen 90a, 90b welcher an der Strebe 60 befestigt ist, eingreift. Auf diese Weise kann eine Drehbegrenzung realisiert werden, ohne dass die Strebe 60 selbst geschwächt werden muss.

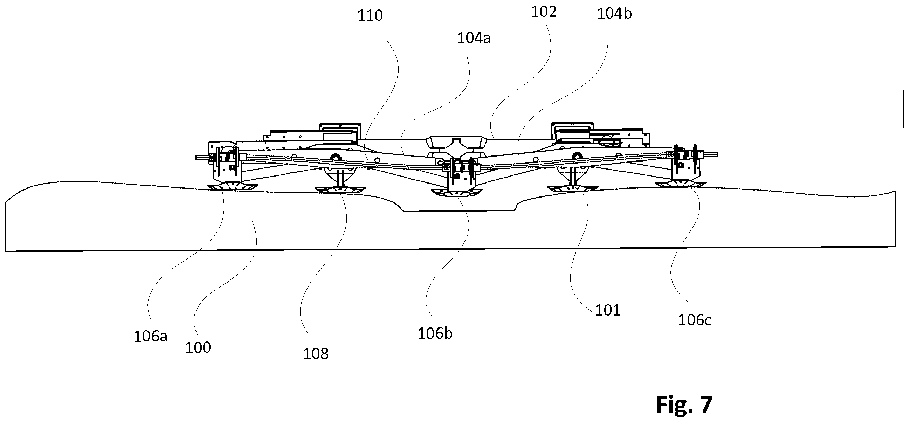

Fig. 7 zeigt eine Ansicht eines erfindungsgemäßen Erntegutaufnehmers in einer Wannenlage mit einer tiefen Fahrspur. Gemäß der Darstellung ist der Untergrund 100 im Wesentlichen wannenförmig. An einem Elementrahmen 102 sind zwei Streben 104a, 104b drehbar aufgehängt. Die Streben 104a, 104b sind mit beweglichen Fortbewegungsmitteln 106a, 106b, 106c verbunden, wobei das Fortbewegungsmittel 106b an beide Streben 104a, 104b angelenkt ist. Der Elementrahmen 102 wird über rahmenfeste Fortbewegungsmittel 101, 108 geführt. Besonders gut an dieser Darstellung ist zu erkennen, dass sich die flexible Welle 110 anpassend an die Bodenkontur 100 verformt. Dadurch kann eine besonders effektive Aufnahme von Erntegut erfolgen.

Im Bereich der mittleren Kufe 106b ist eine Fahrspur im Boden abgebildet, über welcher die Kufe 106b schwebend von den Streben 104a, 104b getragen geführt wird. Dadurch wird ein Absinken der Fortbewegungsmittel in die Fahrspur vermieden, wodurch der Schmutzeintrag in das Erntegut erheblich reduziert wird. Die erfindungsgemäßen Lagerelemente 112a, 112b, 112c sorgen dabei für eine ideale Anpassung der Welle 110 an die Bodenkontur 100.

### Bezugszeichen liste

- 10: Erntegutaufnehmer
- 11: Rahmen
- 12: Welle
- 12a: Wellenteil
- 12b: Wellenteil
- 14: Aufnahmewerkzeuge
- 16a: Fortbewegungsmittel
- 16b: Fortbewegungsmittel
- 16c: Fortbewegungsmittel
- 18: elastisches Joch
- 20a: Lagerelement
- 20b: Lagerelement
- 21: Lager
- 22a: Konsolenwand
- 22b: Konsolenwand
- 23: Lager
- 24: Verbindungswand
- 25: Jochverbindungsfläche
- 26: Konsole
- 27: Verbindungsbereich
- 28: Nabe
- 30: Lagerelement
- 31: Lager
- 32a: Konsolenwand
- 32b: Konsolenwand
- 33: Lager
- 35: Zahnrad
- 38: Nabe
- 40: Antriebsstummel
- 50: Erntegutaufnehmer
- 52: Elementrahmen
- 54: Kufen
- 58: Strebe
- 60: Strebe
- 61: Strebenlager
- 62: Strebenlager
- 64: elastisches Joch
- 66: elastische Welle
- 68: Zinkenscheiben
- 70: Kufen
- 72: Kufen
- 74: Kufen
- 76a: Lenker
- 76b: Lenker
- 76c: Lenker
- 76d: Lenker
- 82: Lagerelement
- 84: Lagerelement
- 85: Abstreifer
- 86: Lagerelement
- 87a: Begrenzungsfläche
- 87b: Begrenzungsfläche
- 88a: Langloch
- 88b: Langloch
- 90a: Bolzen
- 90b: Bolzen
- 100: Untergrund, Bodenkontur
- 101: Fortbewegungsmittel
- 102: Elementrahmen
- 104a: Strebe
- 104b: Strebe
- 106a: Fortbewegungsmittel
- 106b: Fortbewegungsmittel
- 106c: Fortbewegungsmittel
- 108: Fortbewegungsmittel
- 110: Welle

## Patentansprüche

1. Erntegutaufnehmer (10) umfassend eine elastische Welle (12), die über wenigstens ein Fortbewegungsmittel (16a, 16b, 16c) gegenüber einem Rahmen (11, 52) höhenbeweglich gelagert über eine Bodenkontur geführt wird, wobei die elastische Welle (12) wenigstens ein Aufnahmewerkzeug (14) trägt, wobei eine Lagerung der elastischen Welle (12) vorgesehen ist und wenigstens ein Lagerelement (20a, 20b, 30) mit dem Fortbewegungsmittel (16a, 16b, 16c) verbunden ist, **dadurch gekennzeichnet, dass** das Lagerelement (20a, 20b, 30) derart ausgestaltet ist, dass es wenigstens zwei in Axialrichtung beabstandete Lagerpunkte (21, 23, 31, 33) aufweist, die steif miteinander verbunden sind.

2. Erntegutaufnehmer nach Anspruch 1, **dadurch gekennzeichnet, dass** die Lagerpunkte durch zwei beabstandete, jeweils einen Lagerpunkt aufweisende Lager (21, 23, 31, 33) gebildet werden.

3. Erntegutaufnehmer nach Anspruch 1 oder 2, **dadurch gekennzeichnet, dass** das Lagerelement eine Nabe (28, 38) aufweist, über welche die elastische Welle (12) mit den Lagerpunkten (21, 23, 31, 33) verbunden ist.

4. Erntegutaufnehmer nach Anspruch 3, **dadurch gekennzeichnet, dass** der axiale Abstand der Lager so eingestellt ist, dass zwischen den Lagern (21, 23, 31, 33) wenigstens ein Aufnahmewerkzeug (14) an der elastischen Welle (12) angebracht ist.

5. Erntegutaufnehmer nach einem der Ansprüche 2 bis 4, **dadurch gekennzeichnet, dass** ein Antriebsmittel (35) vorgesehen ist, über welches die elastische Welle (12) mit einem Motor verbindbar ist, wobei das Antriebsmittel (35) zwischen den zwei Lagern (31, 33) des Lagerelements (30) angebracht ist.

6. Erntegutaufnehmer nach Anspruch 5, **dadurch gekennzeichnet, dass** das Antriebsmittel (35) mit der Nabe (38) in Wirkverbindung steht und darüber die elastische Welle (12) antreibt.

7. Erntegutaufnehmer nach einem der vorangegangenen Ansprüche, **dadurch gekennzeichnet, dass** ein elastisches Joch (18) mit dem wenigstens einen Lagerelement (20a, 20b, 30) und dem wenigstens einen Fortbewegungsmittel (16a, 16b, 16c) verbunden ist, wobei das Joch derart elastisch verformbar ist, so dass eine Relativbewegung des Fortbewegungsmittels gegenüber dem Rahmen (11, 52) in vertikaler Richtung zur Achse des elastischen Jochs (18) möglich ist.

8. Erntegutaufnehmer nach einem der Ansprüche 1 bis 7, **dadurch gekennzeichnet, dass** die elastische Welle (12) zwei Wellenteile (12a, 12b) umfasst, die verdrehfest miteinander verbunden sind.

9. Erntegutaufnahmer nach Anspruch 8, **dadurch gekennzeichnet, dass** die zwei Wellenteile (12a, 12b) über eine Nabe (38) miteinander verbunden sind.

10. Erntegutaufnehmer nach einem der Ansprüche 5 bis 9, **dadurch gekennzeichnet, dass** auf der elastischen Welle (12) ein mittig angebrachtes Lagerelement (30) vorgesehen ist, zwischen dessen zwei Lagern (31,33) ein Antriebsmittel (35) angebracht ist, und dass zwei weitere Lagerelemente (20a, 20b) vorgesehen sind, zwischen welchen jeweils zwei Lagern (21,23) je wenigstens ein Aufnahmewerkzeug (14) angebracht ist.

11. Erntegutaufnehmer nach einem der vorangehenden Ansprüche, **dadurch gekennzeichnet, dass** wenigstens zwei bewegliche Fortbewegungsmittel (70, 72, 74; 106a, 106b, 106c) vorgesehen sind, die in ihrer Vertikalrichtung veränderlich gegenüber dem insbesondere als Elementrahmen (102) ausgebildeten Rahmen gelagert sind und die elastische Welle (66) tragen und dass eine Strebe (58, 60; 104a, 104b) vorgesehen ist, welche mittels eines Strebenlagers (61, 62) drehbar am Rahmen (52; 102) derart gelagert ist, wobei die Achse des Strebenlagers (61, 62) orthogonal zur Wellenachse, liegt und der Rahmen (102) mit den beweglichen Fortbewegungsmitteln (70, 72, 74; 106a, 106b, 106c) verbindet, wobei die Lageraufnahme in Axialrichtung der Strebe (58, 60; 104a, 104b) zwischen den beweglichen Fortbewegungsmitteln (70, 72, 74; 106a, 106b, 106c) angeordnet ist.

12. Erntegutaufnehmer Anspruch 11
**dadurch gekennzeichnet,**
**dass** eine zweite Strebe (60) drehbar am Tragelement (52) gelagert ist, wobei die zweite Strebe (60) mit zwei beweglichen Fortbewegungsmitteln (72, 74) verbunden ist.

13. Erntegutaufnehmer nach Anspruch 12, **dadurch gekennzeichnet, dass** ein bewegliches Fortbewegungsmittel (72) sowohl mit der ersten als auch mit der zweiten Strebe (58, 60) verbunden ist.

14. Erntegutaufnehmer nach einem der vorangehenden Ansprüche 11 bis 13, **dadurch gekennzeichnet, dass** die den Rahmen (52) tragenden Fortbewegungsmittel (54), mit welchen der Rahmen (52) über den Boden geführt wird, etwa im Bereich des Strebenlagers angeordnet sind.

15. Erntegutaufnehmer nach einem der vorangehenden Ansprüche 11 bis 14,
**dadurch gekennzeichnet,**
**dass** die beweglichen Fortbewegungsmittel (70, 72, 74) über ein elastisches Joch (64) verbunden sind, wobei die Strebe (58, 60) auf dem elastischen Joch (64) und/oder dem Fortbewegungsmittel (70, 72, 74) derart befestigt ist, dass eine translatorische Relativbewegung in axialer Richtung der Strebe (58, 60) erfolgen kann.

## Claims

1. Crop collecting device (10) comprising a resilient shaft (12) which is mounted in a height adjustable manner relative to a frame (11, 52) and which is moved over a contoured ground by means of at least one travel means (16a, 16b, 16c), which resilient shaft (12) carries at least one collecting tool (14), with a bearing being provided for said resilient shaft (12) and at least one bearing element (20a, 20b, 30) is connected to said travel means (16a, 16b, 16c), **characterized in that** said bearing element (20a, 20b, 30) is designed to have at least two bearing points (21, 23, 31, 33) which are spaced apart from each other in the axial direction and which are rigidly connected to each other.

2. Crop collecting device according to claim 1, **characterized in that** said bearing points are constituted by two bearings (21, 23, 31, 33) which are spaced apart from each other and have a bearing point each.

3. Crop collecting device according to claims 1 or 2, **characterized in that** said bearing element has a hub (28, 38) which connects said resilient shaft (12) to said bearing points (21, 23, 31, 33).

4. Crop collecting device according to claim 3, **characterized in that** the axial distance between said bearings has been chosen such that at least one collecting tool (14) can be mounted between said bearings (21, 23, 31, 33) on said resilient shaft (12).

5. Crop collecting device according to one of claims 2 to 4, **characterized in that** a driving device (35) is provided which can be used to connect said resilient shaft (12) to a motor, which driving device (35) is disposed between the two bearings (31, 33) of said bearing element (30).

6. Crop collecting device according to claim 5, **characterized in that** said driving device (35) is operatively connected to said hub (38) through which it drives the resilient shaft (12).

7. Crop collecting device according to one of the preceding claims, **characterized in that** a resilient yoke (18) is connected to said at least one bearing element (20a, 20b, 30) and said at least one travel means (16a, 16b, 16c), which yoke can be elastically deformed so as to enable relative movement between said travel means and said frame (11, 52) in a vertical direction with respect to the axis of said resilient yoke (18).

8. Crop collecting device according to one of claims 1 to 7, **characterized in that** said resilient shaft (12) comprises two shaft parts (12a, 12b) which are coupled for co-rotation.

9. Crop collecting device according to claim 8, **characterized in that** said two shaft parts (12a, 12b) are interconnected via a hub (38).

10. Crop collecting device according to one of claims 5 to 9, **characterized in that** a centrally mounted bearing element (30) is provided on said resilient shaft (12), which bearing element (30) has a driving device (35) mounted between its two bearings (31, 33), and that two further bearing elements (20a, 20b) are provided which have at least one collecting tool (14) each mounted between their two bearings (21, 23) each.

11. Crop collecting device according to one of the preceding claims, **characterized in that** at least two movable travel means (70, 72, 74; 106a, 106b, 106c) are provided which are mounted in a such way that their vertical direction can be varied with respect to said frame, which latter is more specifically designed as an element frame (102), and which carry said resilient shaft (66), and that a strut (58, 60; 104a, 104b) is provided which is rotatably mounted on said frame (52; 102) by means of a strut support (61, 62) in such a way that the axis of said strut support (61, 62) extends orthogonally relative to the axis of said shaft, and connects said frame (102) to said movable travel means (70, 72, 74; 106a, 106b, 106c), with the seat of said support being disposed in the axial direction of said strut (58, 60; 104a, 104b) between said movable travel means (70, 72, 74; 106a, 106b, 106c).

12. Crop collecting device according to claim 11, **characterized in that** a second strut (60) is rotatably mounted on said support element (52), which second strut (60) is connected to two movable travel means (72, 74).

13. Crop collecting device according to claim 12, **characterized in that** a movable travel means (72) is connected to both said first and said second struts (58, 60).

14. Crop collecting device according to one of claims 11 to 13 above, **characterized in that** the travel means (54) which support said frame (52) and which are used to guide said frame (52) across the ground are disposed approximately in the area of the strut support.

15. Crop collecting device according to one of claims 11 to 14 above, **characterized in that** said movable travel means (70, 72, 74) are interconnected via a resilient yoke (64), with said strut (58, 60) being mounted on said resilient yoke (64) and/or said travel means (70, 72, 74) so as to allow relative translational motion in the axial direction of said strut (58, 60).

## Revendications

1. Récolteuse (10) comprenant un arbre élastique (12) qui est guidé au-dessus d'un contour de sol en étant monté mobile en hauteur par rapport à un châssis (11, 52) par l'intermédiaire d'au moins un moyen d'avancement (16a, 16b, 16c), l'arbre élastique (12) portant au moins un outil de réception (14), un palier de l'arbre élastique (12) étant prévu et au moins un élément d'appui (20a, 20b, 30) étant relié au moyen d'avancement (16a, 16b, 16c), **caractérisée en ce que** l'élément d'appui (20a, 20b, 30) est configuré de telle manière qu'il comprend au moins deux points d'appui (21, 23, 31, 33) qui sont espacés les uns des autres dans la direction axiale et qui sont reliés rigidement les uns aux autres.

2. Récolteuse selon la revendication 1, **caractérisée en ce que** les points d'appui sont formés par deux supports (21, 23, 31, 33) espacés l'un de l'autre comprenant chacun un point d'appui.

3. Récolteuse selon la revendication 1 ou 2, **caractérisée en ce que** l'élément d'appui comprend un moyeu (28, 38) par l'intermédiaire duquel l'arbre élastique (12) est relié aux points d'appui (21, 23, 31, 33).

4. Récolteuse selon la revendication 3, **caractérisée en ce que** l'écart axial entre les supports est réglé de sorte qu'au moins un outil de réception (14) est monté sur l'arbre élastique (12) entre les supports (21, 23, 31, 33).

5. Récolteuse selon l'une quelconque des revendications 2 à 4, **caractérisée en ce qu'**un moyen d'entraînement (35) est prévu, par l'intermédiaire duquel l'arbre élastique (12) peut être relié à un moteur, le moyen d'entraînement (35) étant monté entre les deux supports (31, 33) de l'élément d'appui (30).

6. Récolteuse selon la revendication 5, **caractérisée en ce que** le moyen d'entraînement (35) est en liaison fonctionnelle avec le moyeu (38) et entraîne l'arbre élastique (12) par l'intermédiaire de ce dernier.

7. Récolteuse selon l'une quelconque des revendications précédentes, **caractérisée en ce qu'**un joug élastique (18) est relié à l'au moins un élément d'appui (20a, 20b, 30) et à l'au moins un moyen d'avancement (16a, 16b, 16c), le joug étant déformable élastiquement, de sorte qu'un mouvement relatif du moyen d'avancement par rapport au châssis (11, 52) dans le sens vertical par rapport à l'axe du joug élastique (18) est possible.

8. Récolteuse selon l'une quelconque des revendications 1 à 7, **caractérisée en ce que** l'arbre élastique (12) comprend deux parties d'arbre (12a, 12b) qui sont reliées l'une à l'autre de manière solidaire en rotation.

9. Récolteuse selon la revendication 8, **caractérisée en ce que** les deux parties d'arbre (12a, 12b) sont reliées l'une à l'autre par l'intermédiaire d'un moyeu (38).

10. Récolteuse selon l'une quelconque des revendications 5 à 9, **caractérisée en ce qu'**un élément d'appui (30) qui est monté de manière centrale et entre les deux supports (31, 33) duquel est monté un moyen d'entraînement (35) est prévu sur l'arbre élastique (12), et **en ce que** deux autres éléments d'appui (20a, 20b) sont prévus, respectivement au moins un outil de réception (14) étant monté entre lesdits respectivement deux supports (21, 23).

11. Récolteuse selon l'une quelconque des revendications précédentes, **caractérisée en ce qu'**au moins deux moyens d'avancement (70, 72, 74 ; 106a, 106b, 106c) mobiles sont prévus, qui sont montés de manière variable dans le sens vertical par rapport au châssis réalisé en particulier sous la forme d'un châssis élémentaire (102) et portent l'arbre élastique (66) et **en ce qu'**une traverse (58, 60 ; 104a, 104b) est prévue, laquelle est montée en rotation sur le châssis (52, 102) au moyen d'un support de traverse (61, 62), l'axe du support de traverse (61, 62) étant situé perpendiculairement à l'axe de l'arbre et reliant le châssis (102) aux moyens d'avancement (70, 72, 74 ; 106a, 106b, 106c) mobiles, le logement de support étant agencé dans la direction axiale de la traverse (58, 60 ; 104a, 104b) entre les moyens d'avancement (70, 72, 74 ; 106a, 106b, 106c) mobiles.

12. Récolteuse selon la revendication 11, **caractérisée en ce qu'**une deuxième traverse (60) est montée en rotation sur l'élément porteur (52), la deuxième traverse (60) étant reliée aux deux moyens d'avancement (72, 74) mobiles.

13. Récolteuse selon la revendication 12, **caractérisée en ce qu'**un moyen d'avancement (72) mobile est relié aussi bien à la première qu'à la deuxième traverse (58, 60).

14. Récolteuse selon l'une quelconque des revendications 11 à 13, **caractérisée en ce que** les moyens d'avancement (54) portant le châssis (52) et au moyen desquels le châssis (52) est guidé au-dessus du sol sont agencés sensiblement dans la zone du support de traverse.

15. Récolteuse selon l'une quelconque des revendications 11 à 14, **caractérisée en ce que** les moyens d'avancement (70, 72, 74) mobiles sont reliés par un joug élastique (64), la traverse (58, 60) étant fixée sur le joug élastique (60) et/ou sur le moyen d'avancement (70, 72, 74), de telle manière qu'un mouvement relatif en translation peut être réalisé dans la direction axiale de la traverse (58, 60).
